# EUROPEAN PATENT APPLICATION

(11) **EP 4 553 568 A1**
(43) Date of publication of application: **14.05.2025**
(21) Application number: 23835693.5
(22) Date of filing: 30.05.2023
(51) Int. Cl.: G02F 1/1335, G02F 1/1339, G02B 5/30, G02F 1/1337, G02F 1/139, B32B 7/023, B32B 15/08, B32B 7/12, B60J 3/04, G06F 1/16

(54) **OPTICAL LAMINATE, AND SMART WINDOW COMPRISING SAME**

(30) Priority: 06.07.2022 KR 20220083264
(71) Applicant: Dongwoo Fine-Chem Co., Ltd., Iksan-si, Jeollabuk-do 54631 (KR)
(72) Inventor: AHN, Hong-Jun, Iksan-si, Jeollabuk-do 54631 (KR); KWAK, Dong-Hyuk, Iksan-si, Jeollabuk-do 54631 (KR)
(74) Representative: Betten & Resch
(86) International application number: PCT/KR2023/007382
(87) International publication number: WO 2024/010224

(57) **Abstract**

The present invention relates to a transmittance variable optical laminate including a light control laminate including: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein at least one of a surface protection film and a hard coating layer is provided on one or both surfaces of the light control laminate, and at least one of the first transparent conductive layer and the second transparent conductive layer is formed in direct contact with any one of the first polarizing plate and the second polarizing plate, wherein the surface protection film has a peeling force of 1.0 N/25 mm to 2.4 N/25 mm, and the hard coating layer has a surface pencil hardness of HB to 6H, and to a smart window including the same.

## Description

### Technical Field

The present invention relates to an optical laminate and a smart window including the same.

### Background Art

In general, there are many cases in which an external light blocking coating is applied to a glass window of a means of transportation such as a vehicle. However, the transmittance of a conventional glass window of a means of transportation is fixed, and the transmittance of the external light blocking coating is also fixed. Therefore, the overall transmittance of the conventional window of the means of transportation is fixed, which may cause an accident. For example, when the overall transmittance is preset low, there is no problem during day when ambient light is sufficient. However, there is a problem in that it is difficult for a driver or the like to properly check the surroundings of the means of transportation at night when ambient light is insufficient. Alternatively, when the overall transmittance is preset high, there is a problem of causing glare to a driver or the like during day when ambient light is sufficient. Accordingly, a transmittance variable optical laminate capable of changing the transmittance of light when a voltage is applied has been developed.

Meanwhile, when a smart window is to be manufactured using such a transmittance variable optical laminate, it is generally manufactured by manufacturing an optical laminate, and then bonding glass to one or both surfaces of the optical laminate.

However, there is a problem in that, if the surface of the optical laminate is damaged or scratched before bonding of the optical laminate to glass, i.e., during the handling process such as manufacturing or transporting the optical laminate, the optical properties of the optical laminate deteriorate.

Thus, there is a need to protect the optical laminate from surface damage or scratches that may occur during handling of the optical laminate itself that is used to manufacture a smart window.

Accordingly, a surface protection film that may protect the optical laminate from surface damage or scratches by being attached to one or both surfaces of the optical laminate has been used. For example, Korean Patent Application Publication No. 10-2001-0101097 also discloses a surface protection film.

However, in the case of such surface protection films, if the peeling force thereof from an adherend surface is insufficient, there is a problem in that bubbles are generated at the interface between the surface protection film and the adherend surface during the deposition of ITO, etc., and if the peeling force of the surface protection film from the adherend surface is excessively large, there is a problem in that the film inside the laminate is peeled off during the peeling process, or bubbles enter the liquid crystal.

In addition, in Korean Patent Application Publication No. 10-2001-0101097 mentioned above, there is a problem in that the surface protection film does not have a peeling force sufficient for use in the process of manufacturing an optical laminate for a smart window, and thus bubbles are generated at the interface between the surface protection film and the adherend surface during ITO deposition.

Therefore, there is a growing need for an optical laminate having a surface protection film, etc. that may protect the optical laminate without causing such problems.

### DISCLOSURE

### Technical Problem

An object of the present invention is to provide a transmittance variable optical laminate that may protect a light control laminate from external impact or scratches, and prevent the light control laminate from being damaged during processes.

### Technical Solution

In order to achieve the above object, the present invention provides a transmittance variable optical laminate including a light control laminate including: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein at least one of a surface protection film and a hard coating layer is provided on one or both surfaces of the light control laminate, and at least one of the first transparent conductive layer and the second transparent conductive layer is formed in direct contact with any one of the first polarizing plate and the second polarizing plate, wherein the surface protection film has a peeling force of 1.0 N/25 mm to 2.4 N/25 mm, and the hard coating layer has a surface pencil hardness of HB to 6H.

### Advantageous Effects

According to an optical laminate according to one embodiment of the present invention, the peeling force of the surface protection film is optimized, and thus damage to the sealant and the entry of bubbles into the liquid crystal may be prevented from occurring during peeling of the surface protection film.

In addition, according to the optical laminate according to one embodiment of the present invention, the peeling force of the surface protection film is optimized, and thus the entry of bubbles between the light control laminate and the surface protection film may be prevented from occurring during vacuum deposition of the transparent conductive layer.

In addition, according to an optical laminate according to another embodiment of the present invention, the surface pencil hardness of the hard coating layer is optimized, even if the optical laminate does not have a surface protection film, one or both surfaces of the light control laminate may be protected from post-processing and the external environment.

### Brief Description of Drawings

FIG. 1 shows the structure of a light control laminate according to one embodiment of the present invention.
FIGS. 2a to 2e show the laminated structures of polarizing plates according to one or more embodiments of the present invention.
FIGS. 3 and 4 show the structures of transmittance variable optical laminates according to one or more embodiments of the present invention.
FIGS. 5a to 5c and FIGS. 6a to 6c show the laminated structures of smart windows according to one or more embodiments of the present invention.

In the figures, each reference numeral denotes the following:
100: light control laminate
200: polarizing plate
210: polarizer
220: protective layer
230: retardation matching layer
240: refractive index-matching layer
300: transparent conductive layer
400: liquid layer
500: alignment film
600: sealant
700: surface protection film
800: hard coating layer
910: glass for vehicle
920: glass for window

### Best Mode

The present invention relates to a transmittance variable optical laminate which, by optimizing the peeling force of the surface protection film, may prevent damage to the sealant and the entry of bubbles into the liquid crystal from occurring during peeling of the surface protection film, and prevent the entry of bubbles between the light control laminate and the surface protection film from occurring during vacuum deposition of the transparent conductive layer.

The present invention also relates to a transmittance variable optical laminate which, by optimizing the surface pencil hardness of the hard coating layer, may protect one or both surfaces of the light control laminate from post-processing and the external environment even when a surface protection film is not provided on the optical laminate.

More specifically, the present invention relates to a transmittance variable optical laminate including a light control laminate including: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein at least one of a surface protection film and a hard coating layer is provided on one or both surfaces of the light control laminate, and at least one of the first transparent conductive layer and the second transparent conductive layer is formed in direct contact with any one of the first polarizing plate and the second polarizing plate, wherein the surface protection film has a peeling force of 1.0 N/25 mm to 2.4 N/25 mm, and the hard coating layer has a surface pencil hardness of HB to 6H.

The transmittance variable optical laminate of the present invention is particularly suitable for technical fields where the transmittance of light can be changed in response to the application of voltage, and may be used, for example, for a smart window or the like.

The term "smart window" means an optical structure that controls the amount of light or heat passing therethrough by changing light transmittance in response to the application of an electrical signal. In other words, the smart window is configured to be changed into a transparent, opaque or translucent state by voltage and is also called variable transmittance glass, light control glass, or smart glass.

The smart window may be used as a partition for partitioning the internal space of a vehicle or a building or as a partition for privacy, and may be used as a skylight window arranged at an opening of a building. Furthermore, the smart window may be used as highway signs, notice boards, score boards, clocks or advertisement screens, and may be used to replace windows of means of transportations such as vehicles, buses, airplanes, ships, or trains, or glass of means of transportation, such as a sunroof.

The transmittance variable optical laminate of the present invention may also be used for the smart window in the various technical fields mentioned above, but since the conductive layer is directly formed on the polarizing plate, there is no need to include a separate substrate for forming the conductive layer and the thickness thereof is small and the transmittance variable optical laminate is favorable in terms of flexural properties, and thus the optical laminate of the present invention may particularly suitable for use for a smart window for a vehicle or a building. According to one or more embodiments, the smart window to which the transmittance variable optical laminate of the present invention is applied may be used for front windows, rear windows, side windows, and sunroof windows of means of transportation such as a vehicle, or windows and doors for a building. Furthermore, the smart window may be used not only for blocking external light, but also for partitioning internal spaces of automobiles or buildings, such as interior partitions, or for privacy protection, and may also be used in wearable devices such as helmets, glasses, or watches.

Hereinafter, embodiments of the present invention will be described in more detail with reference to the accompanying drawings. However, the following drawings attached to this specification illustrate preferred embodiments of the present invention, and serve to aid in further understanding of the technical idea of the present invention together with the contents of the present invention described above. Therefore, the present invention should not be interpreted as being limited to matters described in the drawings.

Terms used in this specification are for purpose of describing embodiments and are not intended to limit the present invention. In this specification, singular forms also include plural forms unless the context clearly indicates otherwise. For example, the term "polarizing plate" as used herein may mean at least one polarizing plate among a first polarizing plate and a second polarizing plate, and the term "transparent conductive layer" may mean at least one transparent conductive layer among a first transparent conductive layer and a second transparent conductive layer.

As used in the present specification, "comprises" and/or "comprising" are/is not intended to exclude the existence or addition of one or more other components, steps, operations, and/or elements other than the stated components, steps, operations, and/or elements. Throughout the specification, like reference numerals refer to like components.

Spatially relative terms, such as "below", "lower surface", "beneath ", "above", "upper surface", "on" and the like, may be used to easily describe the relationship between one element or component(s) and other element or components(s) as illustrated in the figures. Spatially relative terms should be understood to encompass different orientations of the component in use or operation, in addition to the orientation depicted in the figures. Spatially relative terms should be understood to encompass different orientations of the element in use or operation, in addition to the orientation depicted in the figures. For example, when elements illustrated in the figures are turned over, an element described as being "below" or "beneath" another element may be placed "above" the other element. Thus, the exemplary term "below" may include both the terms "above" and "below". The element may also be oriented in a different direction, and thus spatially relative terms may be interpreted according to the orientation.

As used in the present specification, the "plane direction" may be interpreted as a direction orthogonal to the polarizing plate and/or the transparent conductive layer, that is, the direction of the user's view.

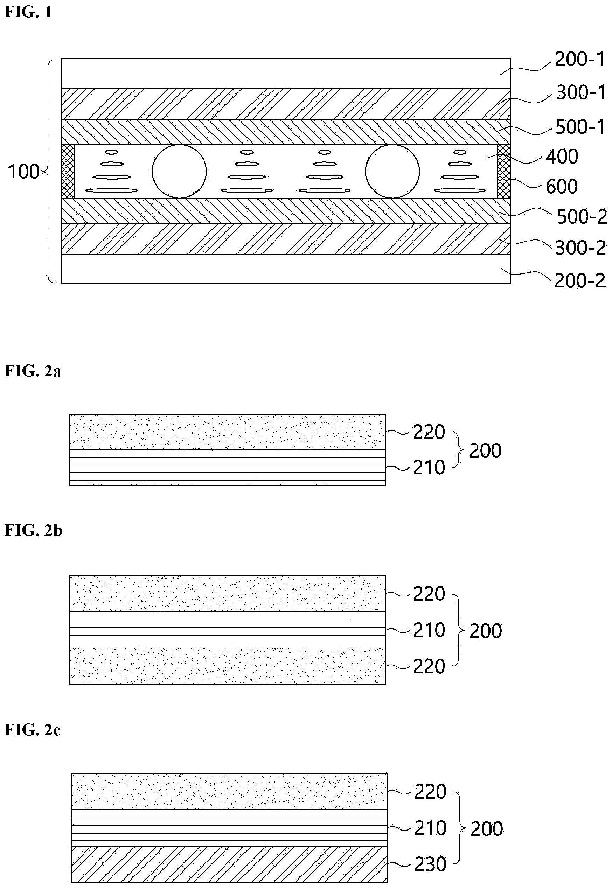

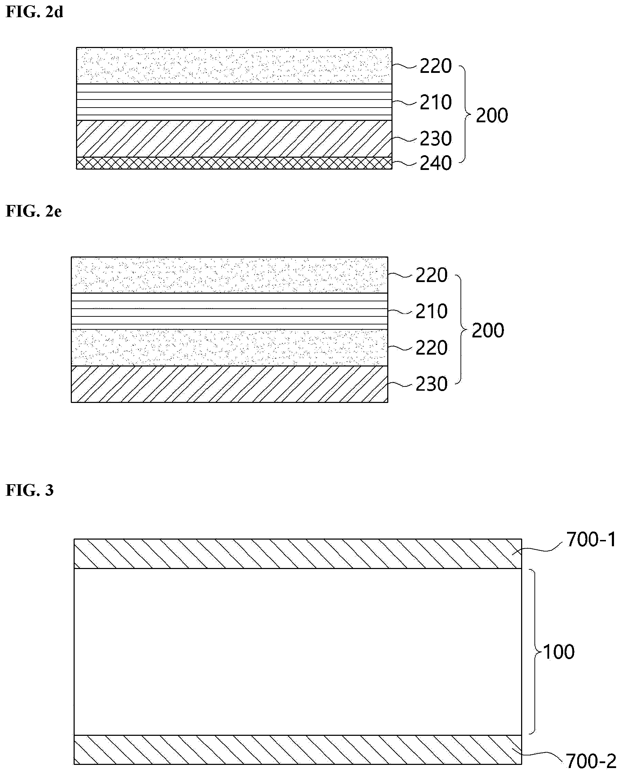

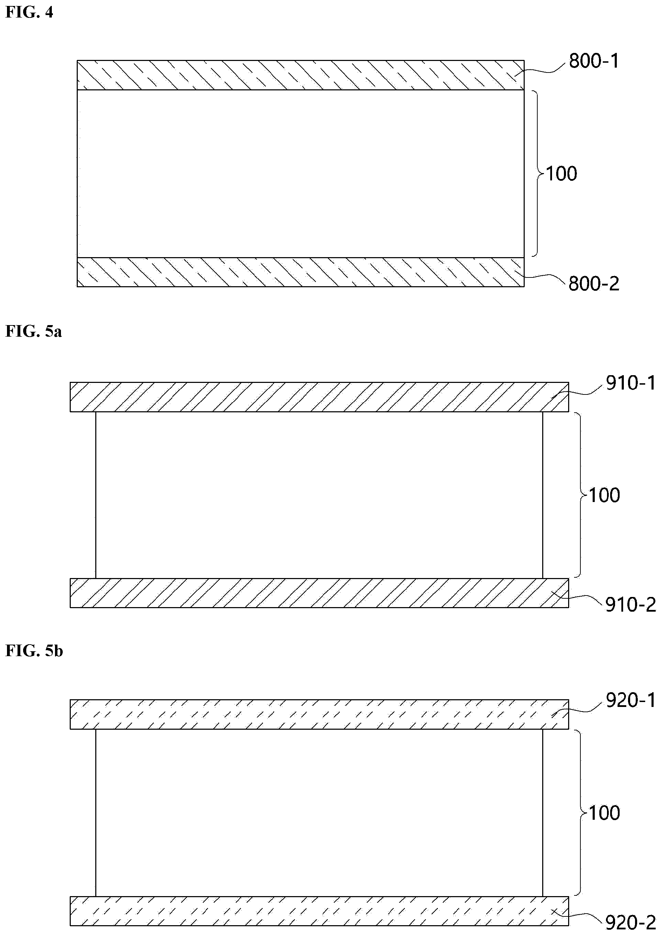

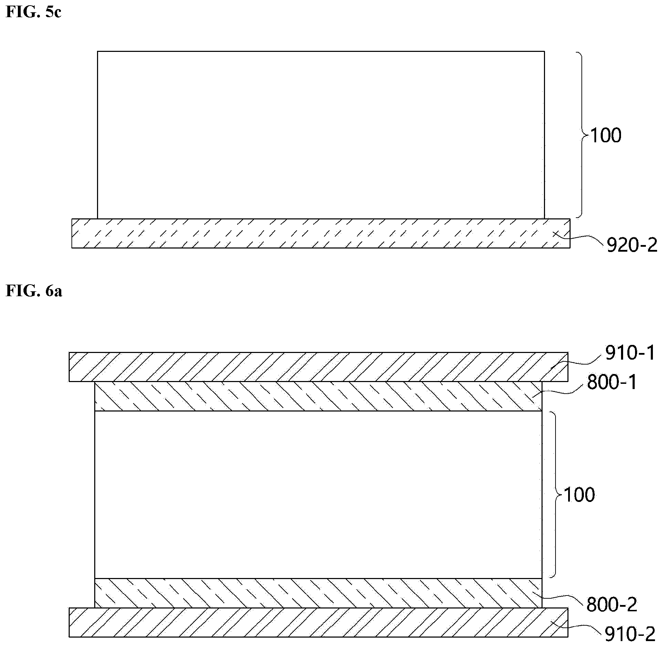

FIG. 1 shows the structure of a light control laminate according to one embodiment of the present invention, FIGS. 2a to 2e show the laminated structures of polarizing plates according to one or more embodiments of the present invention, FIGS. 3 and 4 show the structures of transmittance variable optical laminates according to one or more embodiments of the present invention, and FIGS. 5a to 5c and FIGS. 6a to 6c show the laminated structures of smart windows according to one or more embodiments of the present invention.

Referring to FIG. 1, a light control laminate 100 according to one embodiment of the present invention may include a first polarizing plate 200-1, a second polarizing plate 200-2, a first transparent conductive layer 300-1, a second transparent conductive layer 300-2, and a liquid crystal layer 400.

Referring to FIG. 2, the polarizing plate 200 includes a polarizer 210, and may further include functional layers, such as a protective layer 220, a retardation matching layer 230, and a refractive index-matching layer 240, on one or both surfaces of the polarizer 210. For example, the polarizing plate 200 may include a polarizer 210 and a protective layer 220 laminated on one or both surfaces of the polarizer 210 (see FIGS. 2a and 2b), or may include a polarizer 210, a protective layer 220 laminated on one surface of the polarizer 210, and a retardation matching layer 230 laminated on the other surface opposite to the one surface of the polarizer 210 (see FIG. 2c), or may include a polarizer 210, a protective layer 220 laminated on one surface of the polarizer, and a retardation matching layer 230 and a refractive index-matching layer 240 sequentially laminated on the other surface opposite to the one surface of the polarizer 210 (see FIG. 2d), or may include a polarizer 210, a protective layer 220 laminated on one surface of the polarizer, and a protective layer 220 and a retardation matching layer 230 sequentially laminated on the other surface opposite to the one surface of the polarizer 210 (see FIG. 2e).

The polarizer 210 may be a conventional or later-developed polarizer, and may be, for example, a stretched polarizer or a coated polarizer.

In one embodiment, the stretched polarizer may include a stretched polyvinyl alcohol (PVA)-based resin. The polyvinyl alcohol (PVA)-based resin may be a polyvinyl alcohol-based resin obtained by saponifying a polyvinyl acetate-based resin. Examples of the polyvinyl acetate-based resin include polyvinyl acetate, which is a homopolymer of vinyl acetate, as well as copolymers of vinyl acetate and other monomers copolymerizable therewith. Examples of the other monomers include unsaturated carboxylic acid-based monomers, unsaturated sulfonic acid-based monomers, olefin-based monomers, vinyl ether-based monomers, acrylamide-based monomers having an ammonium group, and the like. In addition, the polyvinyl alcohol (PVA)-based resin may include a modified resin, for example, aldehyde-modified polyvinyl formal or polyvinyl acetal.

In one embodiment, the coated polarizer may be formed by a liquid crystal coating composition, wherein the liquid crystal coating composition may include a reactive liquid crystal compound, a dichroic dye, and the like.

The reactive liquid crystal compound may refer to a compound including, for example, a mesogen skeleton and also including one or more polymerizable functional groups. Such reactive liquid crystal compounds are variously known under the name reactive mesogen (RM). The reactive liquid crystal compound may be polymerized by light or heat to form a cured film in which a polymer network is formed while maintaining the liquid crystal arrangement.

The reactive liquid crystal compound may be a monofunctional or multifunctional reactive liquid crystal compound. The monofunctional reactive liquid crystal compound may refer to a compound having one polymerizable functional group, and the multifunctional reactive liquid crystal compound may refer to a compound having two or more polymerizable functional groups.

The dichroic dye is a component included in the liquid crystal coating composition to impart polarization properties, and has different absorbances in the major and minor axis directions of the molecule. The dichroic dyes may be a conventional or later-developed dichroic dye, and may include at least one selected from the group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The liquid crystal coating composition may further include a solvent capable of dissolving the reactive liquid crystal compound and the dichroic dye, and examples of the solvent include propylene glycol monomethyl ether acetate (PGMEA), methyl ethyl ketone (MEK), xylene, and chloroform. In addition, the liquid crystal coating composition may further include a leveling agent, a polymerization initiator, and the like, within a range that does not impair the polarization characteristics of the coating film.

The protective layer 220 serves to protect the polarization characteristics of the polarizer 210 from post-processing and external environments, and may be provided in the form of a protective film, etc.

The protective layer 220 may be formed on and in direct contact with one or both surfaces of the polarizer 210, as shown in FIGS. 2a and 2b, without being limited thereto. For example, the protective layer may have a multi-layer structure in which one or more protective layers are continuously laminated, and may be formed in direct contact with other functional layer(s).

In one or more embodiments, the protective layer 220 may include at least one selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene(PP), polymethyl acrylate (PMA), polymethyl methacrylate (PMMA), polyethyl acrylate (PEA), polyethyl methacrylate (PEMA), and cyclic olefin polymer (COP).

The retardation matching layer 230 may be formed on and in direct contact with one surface of the polarizer 210, as shown in FIGS. 2c and 2d, without being limited thereto. For example, as shown in FIG. 2e, the retardation matching layer 230 may be formed on one surface of the protective layer 220, so that the polarizer 210, the protective layer 220, and the retardation matching layer 230 may be sequentially laminated.

The retardation matching layer 230 may include either a stretched polymer film obtained by stretching a polymer film capable of imparting optical anisotropy in an appropriate manner, or a liquid crystal polymer film.

In one embodiment, the stretched polymer film may include a polymer layer including a polyolefin such as polyethylene (PE) or polypropylene (PP), a cyclic olefin polymer (COP) such as polynorbornene, a polyester such as polyvinyl chloride (PVC), polyacrylonitrile (PAN), polysulfone (PSU), acrylic resin, polycarbonate (PC), or polyethylene terephthalate(PET), a cellulose acetate-based polymer such as polyacrylate, polyvinyl alcohol (PVA) or triacetyl cellulose (TAC), or a copolymer of two or more monomers among the monomers forming the polymers.

The method of obtaining the stretched polymer film is not particularly limited, and for example, the stretched polymer film may be obtained by forming the polymer material into a film form, followed by stretching. The method for forming the polymer material into a film form is not particularly limited, and the polymer material may be formed into a film by a known method such as injection molding, sheet molding, blow molding, injection blow molding, inflation molding, extrusion molding, foam molding, cast molding, or the like. In addition, a secondary processing molding method such as pressure molding or vacuum molding may also be used. Thereamong, extrusion molding or cast molding is preferably used. In this case, for example, an unstretched film may be extrusion-molded using an extruder equipped with a T-die, a circular die, or the like. When a molded product is obtained by extrusion molding, a material prepared by melt-kneading various resin components, additives, etc. may be used and the molded product may be formed by melt-kneading during extrusion molding. Furthermore, after various resin components are dissolved using a common solvent, for example, a solvent such as chloroform, or 2 methylene chloride, an unstretched film may be cast-molded by cast drying and solidification.

The stretched polymer film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method of tenter stretching, a biaxial stretching method of tubular stretching, or the like.

The liquid crystal polymer film may include a reactive liquid crystal compound in a polymerized state. The above-described contents regarding the reactive liquid crystal compound of the coated polarizer may be equally applied to the reactive liquid crystal compound.

In one or more embodiments, the thickness of the retardation matching layer 230 may be 10 µm to 100 µm in the case of the stretched polymer film, and 0.1 µm to 5 µm in the case of the liquid crystal polymer film.

The refractive index matching layer 240 is provided to compensate for the refractive index difference of the optical laminate caused by the transparent conductive layer 300, and may serve to improve the viewing characteristics, etc. by reducing the refractive index difference. Furthermore, the refractive index matching layer 240 may be provided to correct the color caused by the transparent conductive layer 300. Meanwhile, when the transparent conductive layer has a pattern, the refractive index matching layer 240 may compensate for the difference in transmittance between a pattern region with the pattern formed and a non-pattern region where no pattern is formed.

Specifically, the transparent conductive layer 300 is laminated adjacent to other members having a refractive index different therefrom (for example, the polarizer, etc.), and the difference in the refractive index between the transparent conductive layer and other layer adjacent thereto may lead to the difference in light transmittance. In particular, when a pattern is formed on the transparent conductive layer, a problem may arise in that the pattern region and the non-pattern region are viewed to be distinguishable from each other. Therefore, the refractive index matching layer 240 is included to compensate for refractive index, thereby reducing the difference in light transmittance of the optical laminate. In particular, when a pattern is formed on the transparent conductive layer, the pattern region and the non-pattern region should not be viewed to be distinguishable from each other.

In one embodiment, the refractive index of the refractive index matching layer 240 may be appropriately selected depending on the material of another adjacent member, but is preferably 1.4 to 2.6, more preferably 1.4 to 2.4. In this case, it is possible to prevent light loss caused by a sharp difference in refractive index between the transparent conductive layer 300 and other members such as the polarizer 210.

The refractive index matching layer 240 is not particularly limited as long as it can prevent the sharp difference in refractive index between the transparent conductive layer 300 and other members such as the polarizer 210, and it may include a compound used in the formation of a conventional or later-developed refractive index matching layers. For example, the refractive index matching layer may be formed from a refractive index-matching layer formation composition including a polymerizable isocyanate compound.

In one embodiment, the polarizing plate 200 may further include other functional layers to assist or enhance the characteristics of the polarizer, in addition to the above-mentioned functional layers and, for example, may further include an overcoat layer or a hard coating layer in order to further improve the mechanical durability.

In one or more embodiments, the polarizing plate 200 may have a thickness of 30 µm to 200 µm, preferably 30 µm to 170 µm, more preferably 50 µm to 150 µm. In this case, the polarizing plate 200 may maintain its optical characteristics while an optical laminate having a small thickness may be manufactured.

The transparent conductive layer 300 is provided for driving the liquid crystal layer 400 and may be formed in direct contact with the polarizing plate 200. For example, as shown in FIG. 1, the first transparent conductive layer 300-1 and the second transparent conductive layer 300-2 may be formed in direct contact with the first polarizing plate 200-1 and the second polarizing plate 200-2, respectively.

Conventionally, a light control laminate used to manufacture a smart window, etc. is manufactured by forming a conductive layer for driving a liquid crystal on one surface of a substrate and bonding the other surface of the substrate to a polarizing plate. However, the light control laminate 100 according to the present invention has the conductive layer directly formed on one surface of the polarizing plate without including a separate substrate for forming the conductive layer, and thus is characterized by having improved transmittance in light transmission mode and improved flexural properties while having a reduced overall thickness.

In one embodiment, the transparent conductive layer 300 may be directly deposited and formed on one surface of the polarizing plate 200. In this case, the transparent conductive layer 300 may be formed in direct contact with a pretreated surface of the polarizing plate 200 after performing pre-treatment such as corona treatment or plasma treatment on one surface of the polarizing plate 100 in order to improve the adhesion between the transparent conductive layer 300 and the polarizing plate 200. The pre-treatment is not limited to corona treatment or plasma treatment, and may be any conventional or later-developed pre-treatment process that does not impair the purpose of the present invention.

In another embodiment of the present invention, the transparent conductive layer 300 may be formed in direct contact with the polarizing plate 200 with a highly adhesive layer as a primer (not shown) interposed therebetween in order to improve the adhesion between the transparent conductive layer 300 and the polarizing plate 200.

The transparent conductive layer 300 preferably has a visible light transmittance of 50% or more, and for example, may include at least one selected from the group consisting of a transparent conductive oxide, a metal, a carbonaceous material, a conductive polymer, a conductive ink, and nanowires, without being limited thereto, and a conventional or later-developed transparent conductive layer material may be used.

In one or more embodiments, the transparent conductive oxide may include at least one selected from a group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), and the like. Furthermore, the metal may include at least one selected from a group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and alloys containing at least one of these metals, and may include, for example, a silver-palladium-copper (APC) alloy or a copper-calcium (CuCa) alloy. The carbonaceous material may include at least one selected from the group consisting of carbon nanotubes (CNTs), and graphene, and the conductive polymer may include at least one selected from the group consisting of polypyrrole, polythiophene, polyacetylene, PEDOT, and polyaniline. The conductive ink may be a mixture of metal powder and a curable polymeric binder, and the nanowires may be, for example, silver nanowires (AgNWs).

Furthermore, the transparent conductive layer 300 may be formed to have a structure consisting of two or more layers by combining the above-described materials. For example, in order to reduce the reflectivity of incident light and increase the transmittance, the transparent conductive layer may be formed to have a two-layer structure including a metal layer and a transparent conductive oxide layer.

The liquid crystal layer 400 may change the driving mode of the optical laminate by adjusting the transmittance of light incident in one or more directions in response to an electric field.

The liquid crystal layer 400 may include a liquid crystal compound and a spacer, and may mean, for example, a region defined by a first alignment film 500-1, a second alignment film 500-2, and a sealant 600 as shown in FIG. 1.

The liquid crystal compound is not particularly limited as long as it is driven in response to an electric field and is capable of controlling the light transmittance, and a conventional or later-developed liquid crystal compound may be used. For example, the contents regarding the reactive liquid crystal compound of the above-described coated polarizer may be equally applied to the liquid crystal compound.

The liquid crystal driving mode of the liquid crystal layer 400 is not particularly limited, and for example, the liquid crystal may be driven in a twisted nematic (TN) mode as shown in FIG. 1, but may also be driven in a super twisted nematic (STN) mode, a vertical alignment (VA) mode, an electrically controlled birefringence (ECB) mode, etc.

The spacer may include at least one of a ball spacer and a column spacer, and is particularly preferably a ball spacer. The spacer may be composed of one or more spacers, and preferably has a height of 1 µm to 10 µm. In addition, when viewed in a plane direction, the area occupied by the spacer in the liquid crystal layer 400 is preferably 0.01 to 10% of the area of the liquid crystal layer 400 in terms of improving the user's visibility and the transmittance in light transmission mode.

In one embodiment, the liquid crystal layer 400 may further include an alignment film 500 as needed. For example, the alignment film 500 may be formed on both surfaces of the liquid crystal layer 400 including a liquid crystal compound.

The alignment film 500 is not particularly limited as long as it serves to align the liquid crystal compound, but may preferably include a photo-alignable or photo-curable polymer, etc. For example, the alignment film 500 may be formed by applying and curing an alignment film coating composition including a photo-alignable or photo-curable polymer, a photopolymerization initiator, and a solvent.

The photo-alignable or photo-curable polymer is not particularly limited, but may be a cinnamate-based polymer, a polyimide-based polymer, or the like. For example, it may be poly(vinyl cinnamate) (PVCi), poly(siloxane cinnamate) (PSCN), poly(ω(4-chalconyloxy)alkoxyphenylmaleimide), 6-FDA-HAB-Cl, or the like. In addition, a conventional or later-developed polymer capable of exhibiting alignment properties may be used.

The sealant 600 is positioned between the first polarizing plate 200-1 and the second polarizing plate 200-2 in the inactive region, and serves to bond the first polarizing plate and the second polarizing plate to each other. The sealant 600 may be provided to secure a space for the liquid crystal layer 400 to be provided between the first polarizing plate 200-1 and the second polarizing plate 200-2 together with the spacer.

The sealant 600 may include a curable resin as a base resin. As the base resin, a UV-curable resin or thermosetting resin known in the art to be usable for a sealant may be used. The UV-curable resin may be a polymer of a UV-curable monomer. The thermosetting resin may be a polymer of a thermosetting monomer.

As the base resin of the sealant 600, for example, an acrylate-based resin, an epoxy-based resin, a urethane-based resin, a phenol-based resin, or a mixture of these resins may be used. In one embodiment, the base resin may be an acrylate-based resin, wherein the acrylate-based resin may be a polymer of an acrylic monomer. The acrylic monomer may be, for example, a multifunctional acrylate. In another embodiment, the sealant may further include a monomer component in addition to the base resin. The monomer component may be, for example, a monofunctional acrylate. As used herein, the term "monofunctional acrylate" may mean a compound having one acrylic group, and the term "multifunctional acrylate" may mean a compound having two or more acrylic groups. The curable resin may be cured by UV irradiation and/or heating. The UV irradiation or heating may be appropriately performed under conditions that do not impair the purpose of the present application. If necessary, the sealant may further include an initiator, for example, a photoinitiator or a thermal initiator.

The sealant 600 may be formed by a method commonly used in the art, and for example, may be formed by drawing a sealant into the outer peripheral region (i.e., inactive region) of the liquid crystal layer using a dispenser having a nozzle.

Referring to FIG. 3, a transmittance variable optical laminate according to one embodiment of the present invention may include a light control laminate 100 and a surface protection film 700 formed on both surfaces of the light control laminate.

The surface protection film 700 may be provided for the purpose of preventing scratches, contamination, corrosion, etc. on the surface, which may occur during the manufacturing, transport, or storage of the light control laminate 100. The surface protection film 700 may be peeled off and removed from the light control laminate before glass such as a glass for a vehicle 910 or a glass for a building 920 is attached to the light control laminate 100 (see FIG. 5).

The surface protection film 700 preferably has a peeling force of 1.0 N/25 mm to 2.4 N/25 mm from the light control laminate. The peeling force may be measured by measuring the 180° peeling force (N/25 mm) between the light control laminate 100 and the surface protection film at a speed of 300 mm/min using a universal testing machine. When the peeling force of the surface protection film satisfies the above range, there is no bubble entry into the optical laminate and no damage to the sealant during the manufacturing of the light control laminate 100 or during peeling of the surface protection film 700, so that the durability of the optical laminate may be further improved.

The surface protection film 700 may include a base film and a pressure sensitive adhesive layer formed on the base film.

The base film may be a conventional or later-developed base film, and may include, for example, at least one selected from the group consisting of a polyolefin-based film, a polyester-based film, an acrylic film, a styrene-based film, an amide-based film, a polyvinyl chloride-based film, a polyvinylidene chloride-based film, and a polycarbonate-based film. The thickness of the base film may be 10 µm µm to 300 µm, taking into consideration the possibility of deformation during the manufacturing, transportation, or storage of the light control laminate 100, adhesion to the light control laminate 100, and the like.

The pressure sensitive adhesive layer may be formed using an pressure sensitive adhesive, and preferably has appropriate adhesiveness so that only the surface protection film 700 is cleanly removed from the light-emitting laminate 100 during peeling of the surface protection film 700 and other members such as the sealant are not affected, and at the same time, has transparency and thermal stability.

The pressure sensitive adhesive may be a conventional or later-developed pressure sensitive adhesive. In one or more embodiments, the adhesive may be an acrylic pressure sensitive adhesive, a rubber-based pressure sensitive adhesive, a silicone-based pressure sensitive adhesive, a urethane-based pressure sensitive adhesive, a polyvinyl alcohol-based pressure sensitive adhesive, a polyvinyl pyrrolidone-based pressure sensitive adhesive, a polyacrylamide-based pressure sensitive adhesive, a cellulose-based pressure sensitive adhesive, a vinyl alkyl ether-based pressure sensitive adhesive, or the like. The pressure sensitive adhesive is not particularly limited as long as it has adhesive and viscoelastic properties. However, from the viewpoint of ease availability, etc., the pressure sensitive adhesive may preferably be an acrylic pressure sensitive adhesive, and may include, for example, a (meth)acrylate copolymer, a crosslinking agent, a solvent, etc.

The crosslinking agent may be a conventional or later-developed crosslinking agent, and may include, for example, a polyisocyanate compound, an epoxy resin, a melamine resin, a urea resin, dialdehydes, a methylol polymer, etc. Preferably, it may include a polyisocyanate compound.

The solvent may include a solvent commonly used in the field of resin compositions, and examples thereof include alcoholic compounds such as methanol, ethanol, isopropanol, butanol, and propylene glycol methoxy alcohol; ketone-based compounds such as methyl ethyl ketone, methyl butyl ketone, methyl isobutyl ketone, diethyl ketone, and dipropyl ketone; acetate-based compounds such as methyl acetate, ethyl acetate, butyl acetate, and propylene glycol methoxy acetate; cello solve-based compounds such as methyl cellosolve, ethyl cellosolve, and propyl cellosolve; and hydrocarbon-based compounds such as hexane, heptane, benzene, toluene, and xylene. These solvents may be used alone or in combination of two or more.

The thickness of the pressure sensitive adhesive layer may be appropriately determined depending on the type of resin acting as the pressure sensitive adhesive, the adhesive strength, the environment in which the pressure sensitive adhesive is used, etc. In one embodiment, in order to make the peeling force of the surface protection film 700 be 1.0 N/25 mm to 2.4 N/25 mm, the pressure sensitive adhesive layer may have a thickness of 1 µm to 30 µm.

Referring to FIG. 4, a transmittance variable optical laminate according to another embodiment of the present invention may include a light control laminate 100 and a hard coating layer 800 formed on both surfaces of the light control laminate.

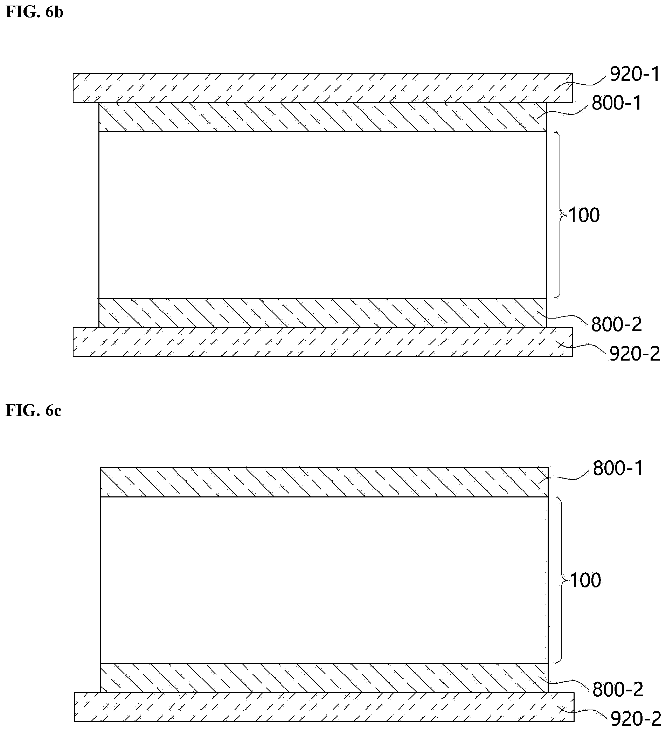

The hard coating layer 800 may be provided to protect members such as the polarizing plate, the transmittance variable layer, and the light control laminate from external physical and chemical impacts, and may perform substantially the same function as the surface protection layer 700 in that it functions to protect the light control laminate 100 from the external environment. Therefore, when the transmittance variable optical laminate of the present invention includes the hard coating layer 800, it may not include the surface protection film 700 (see FIGS. 4 and 6).

The hard coating layer 800 preferably has a surface pencil hardness of HB to 6H to function to protect the light control laminate 100 from the external environment. The surface pencil hardness of the hard coating layer may be measured using a pencil hardness tester ( Sukbo Science Co., Ltd., Korea) at a load of 500 g. The pencil used may be a Mitsubishi product, and five measurements are made for each pencil hardness. For this purpose, after heat treatment at 100°C for 10 minutes, whether scratches are visible to the naked eye may be evaluated. When the surface pencil hardness of the hard coating layer satisfies the above range, the hard coating layer may have excellent abrasion resistance, thereby preventing surface defects in subsequent processes.

The hard coating layer 800 may be a conventional or later-developed hard coating layer. According to one embodiment of the present invention, the hard coating layer may be formed from a hard coating composition including an acrylate-based or epoxy-based compound, inorganic fine particles, a photoinitiator, etc. The acrylate-based compound may include a monomer or oligomer containing a (meth)acrylate group, and the term "(meth)acryl-" used in the present specification is used to mean "methacryl-", "acryl-", or both. Non-limiting examples of the acrylate-based compound include neopentyl glycol acrylate, 1,6-hexanediol (meth)acrylate, propylene glycol di(meth)acrylate, triethylene glycol di(meth)acrylate, dipropylene glycol di(meth)acrylate, polyethylene glycol di(meth)acrylate, polypropylene glycol di(meth)acrylate, trimethylolpropane tri(meth)acrylate, trimethylolethane tri(meth)acrylate, 1,2,4-cyclohexane tetra(meth)acrylate, pentaglycerol tri(meth)acrylate, pentaerythritol tetra(meth)acrylate, pentaerythritol tri(meth)acrylate, dipentaerythritol tri(meth)acrylate, dipentaerythritol penta(meth)acrylate, dipentaerythritol tetra(meth)acrylate, dipentaerythritol hexa(meth)acrylate, tripentaerythritol tri(meth)acrylate, tripentaerythritol hexatri(meth)acrylate, bis(2-hydroxyethyl)isocyanurate di(meth)acrylate, hydroxyethyl (meth)acrylate, hydroxypropyl (meth)acrylate, hydroxybutyl (meth)acrylate, isooctyl (meth)acrylate, iso- decyl (meth)acrylate, stearyl (meth)acrylate, tetrahydrofurfuryl (meth)acrylate, phenoxyethyl (meth)acrylate, isobornyl (meth)acrylate, and the like. These may be used alone or in combination of two or more. The acrylate-based compound may include an epoxy (meth)acrylate compound and/or a urethane (meth)acrylate compound. In addition, the epoxy-based compound may include a monomer or oligomer having at least one epoxy group in the molecule. The epoxy group may be an alicyclic epoxy group. The alicyclic ring included in the epoxy group may have 3 to 7 carbon atoms, and may be, for example, an alicyclic epoxy group (cyclohexylepoxy) including a cyclohexane ring. The alicyclic ring may have a substituent. For example, the alicyclic ring may include an alkyl substituent having 1 to 20 carbon atoms. If the number of carbon atoms in the alkyl substituent is more than 20, it may be disadvantageous in terms of the curing rate. The alkyl substituent may be linear or branched, and when it is branched, it may have 3 or more carbon numbers.

According to one embodiment of the present invention, in the method for manufacturing a hard coating film, the hard coating composition contains inorganic fine particles. According to one embodiment of the present invention, the inorganic fine particles may be inorganic fine particles having a nano-sized particle size, for example, nano-fine particles having a particle size of 100 nm or less, preferably 10 nm to 100 nm, more preferably 10 nm to 50 nm. In addition, as the inorganic fine particles, for example, silica fine particles, aluminum oxide particles, titanium oxide particles, or zinc oxide particles may be used.

As the inorganic fine particles are included, they may further improve the hardness of the hard coating film. According to one embodiment of the present invention, the inorganic fine particles may be included in an amount of 10 to 60 parts by weight, preferably 20 to 50 parts by weight, based on 100 parts by weight of the hard coating composition. As the inorganic fine particles are included in an amount within the above range, it is possible to achieve the effect of improving the hardness of the hard coating film by the addition of the inorganic fine particles within a range that does not deteriorate the physical properties of the hard coating composition.

According to one embodiment of the present invention, in the method for manufacturing the hard coating film, the hard coating composition includes a photoinitiator. According to one embodiment of the present invention, examples of the photoinitiator include, but are not limited to, 1-hydroxy-cyclohexyl-phenylketone, 2-hydroxy-2-methyl-1-phenyl-1-propanone, 2-hydroxy-1-[4-(2-hydroxyethoxy)phenyl]-2-methyl-1-propanone, methylbenzoyl formate, α,α-dimethoxy-α-phenylacetophenone, 2-benzoyl-2-(dimethylamino)-1-[4-(4-morpholinyl)phenyl]-1-butanone, 2-methyl-1-[4-(methylthio)phenyl]-2-(4-morpholinyl)-1-propanonediphenyl(2,4,6-trimethylbenzoyl)-phosphine oxide, or bis(2,4,6-trimethylbenzoyl)-phenylphosphine oxide. Also, photoinitiator products currently on the market include Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F, etc. These photoinitiators may be used alone or in combination of two or more.

According to one embodiment of the present invention, the photoinitiator may be included in an amount of 0.5 to 10 parts by weight, preferably 1 to 5 parts by weight, based on 100 parts by weight of the hard coating composition. When the photoinitiator is present in the above range, sufficient crosslinking photopolymerization may be achieved without deteriorating the physical properties of the hard coating film.

Meanwhile, in the method for manufacturing the hard coating film of the present invention, the hard coating composition may further contain, in addition to the above-described components, additives commonly used in the art to which the present invention pertains, such as a surfactant, an anti-yellowing agent, a leveling agent, or an antifouling agent. In addition, the content of the additives may be variously adjusted within a range that does not deteriorate the properties of the hard coating composition according to the present invention, and thus is not particularly limited.

In one or more embodiments, the thickness of the hard coating layer 800 may be 1 µm to 50 µm, preferably more than 2 µm and less than 23 µm, more preferably 3 µm to 20 µm. The thickness may refer to the thickness after drying. When the thickness of the hard coating layer 800 satisfies the above range, there is an advantage in that the optical laminate may have not only excellent flexural resistance and durability but also a reduced thickness.

Meanwhile, although FIG. 3 shows an example in which the surface protection film 700 is formed on both surfaces of the light control laminate 100, and FIG. 4 shows an example in which the hard coating layer 800 is formed on both surfaces of the light control laminate, the present invention is not necessarily limited thereto. For example, a transmittance variable optical laminate according to another embodiment of the present invention may include: a light control laminate; a surface protection film formed on one surface of the light control laminate; and a hard coating layer formed on the other surface opposite to the one surface of the light control laminate.

The present invention includes, in addition to the above-described transmittance variable optical laminate, a smart window including the same. In addition, the present invention includes an automobile in which the smart window is applied to at least one of a front window, a rear window, a side window, a sunroof window, and an interior partition, as well as a window for a building including the smart window.

For example, an automobile including the smart window of the present invention may be either one in which a glass for a vehicle 910 is bonded to both surfaces of the transmittance variable optical laminate from which the surface protection film 700 has been peeled off (see FIG. 5a), or one in which the glass for a vehicle 910 is bonded to both surfaces of the transmittance variable optical laminate including the hard coating layer 800 (see FIG. 6a). For example, the smart window including the glass for a vehicle may be manufactured by placing an adhesive film and the glass for a vehicle on both surfaces of the optical laminate, and then heating them using a press machine at a temperature of 90°C and a vacuum of about 1 bar for 10 to 20 minutes, wherein the adhesive film may include an EVA film, a PVB film, or the like.

In addition, a window for a building (window glass 920) may be bonded to both surfaces or one surface of the transmittance variable optical laminate. A smart window product for a window having the same configuration as that in FIGS. 5b and 6b may be manufactured by bonding a window glass to both surfaces of the optical laminate using a UV adhesive, followed by UV curing, and a smart window product for a window having the same configuration as that in FIGS. 5c and 6c may be manufactured by bonding a window glass to one surface of the optical laminate by a lamination method.

### Mode for Invention

Hereinafter, embodiments of the present invention will be described in detail. However, the present invention may be embodied in various different forms and should not be construed as being limited to the examples disclosed below. Rather, these examples are provided so that this disclosure will be thorough and complete and will fully convey the concept of the present invention to those skilled in the art, and the present invention will only be defined by the scope of the appended claims.

### Preparation Example 1: Production of Polarizing Plate

### (1) Swelling Treatment Process

A 60-µm-thick polyvinyl alcohol film (raw film) (manufactured by Kuraray Co., Ltd., trade name: Kurare Poval Film VF-PE#6000, average degree of polymerization: 2,400, degree of saponification: 99.9 mol%) was continuously unwound from a film roll, conveyed, and dipped in a swelling bath containing pure water at 20°C for 30 seconds. In this swelling treatment process, roll-to-roll stretching (longitudinal uniaxial stretching) was performed by creating a difference in peripheral speed between the nip rolls. The stretching ratio with respect to the raw film was set to 2.5 times.

### (2) Dyeing Treatment Process

Next, the film that passed through the nip rolls was dipped in a dyeing bath containing pure water/potassium iodide/iodine/boric acid at a mass ratio of 100/2/0.01/0.3 at 30°C for 120 seconds. In this dyeing treatment process, roll-to-roll stretching (longitudinal uniaxial stretching) was performed by creating a difference in peripheral speed between the nip rolls. The stretching ratio with respect to the film after the swelling treatment process was set to 1.1 times.

### (3) Crosslinking Treatment Process

Next, the film that passed through the nip rolls was dipped in a first crosslinking bath containing pure water/potassium iodide/boric acid at a mass ratio of 100/12/4 at 56°C for 70 seconds. Roll-to-roll stretching (longitudinal uniaxial stretching) was performed by creating a difference in peripheral speed between the nip rolls and the nip rolls provided between the first crosslinking bath and the second crosslinking bath. The stretching ratio with respect to the film after the dyeing treatment process was set to 1.9 times.

### (4) Color Complementing Process

Next, the film after the crosslinking treatment was dipped in a second crosslinking bath containing potassium iodide/boric acid/pure water at a mass ratio of 9/2.9/100 at 40°C 10 seconds.

### (5) Cleaning Treatment Process

Next, the film after the second crosslinking treatment was dipped in a cleaning bath containing pure water at 14°C for 5 seconds, and washed using a shower method with a shower volume of 5 m³/h at a shower temperature of 14°C.

### (6) Drying Treatment Process

Next, the film after the cleaning treatment process was heat-dried at 80°C for 190 seconds by passage through a drying oven, thereby producing a polarizer film. The moisture content after drying was 13.6%, and the thickness of the obtained polarizer film was about 21 µm.

### (7) Bonding Treatment Process

Next, as an adhesive, an aqueous adhesive containing 5 parts by mass of polyvinyl alcohol per 100 parts by mass of water was prepared. Thereafter, a first triacetyl cellulose (TAC) protective film (thickness: 60 µm) and a second triacetyl cellulose (TAC) protective film (thickness: 40 µm) were laminated on both surfaces of the polarizer film using the prepared UV adhesive. The obtained laminate was exposed to UV light, and the adhesive was cured, thereby producing a polarizing plate. In addition, the thickness of the adhesive layer in the obtained polarizing plate was about 2 µm.

### Preparation Example 2: Preparation of Hard Coating Composition

A hard coating composition was prepared by mixing 16.2 g of a dendrimer compound (Miwon Specialty Chemical Co., Ltd., SP-1106), 14.4 g of inorganic nanoparticles (10 nm to 20 nm, silica particles: 50 wt%, solvent: 14.4 g of methyl ethyl ketone (MEK)), 1.8 g of a polyfunctional (meth)acrylate containing an ethylene glycol group, 0.7 g of a photoinitiator (1-hydroxycyclohexyl phenyl ketone), and 2.9 g of methyl ethyl ketone.

### Preparation Example 3: Formation of Hard Coating Layer (HC2)

The hard coating composition prepared in Preparation Example 2 was applied by Mayer bar coating to one surface of the second triacetyl cellulose (TAC) protective film (thickness: 40 µm) of the polarizing plate while adjusting the thickness, and then dried at 80°C for 5 minutes and cured with a high-pressure mercury lamp at a light dose of 500 mJ/cm², thereby producing a polarizing plate having a hard coating layer (HC2) formed on one surface thereof. As a result of measuring the thickness of the polarizing plate after formation of the hard coating layer (HC2) and the thickness of the polarizing plate before formation of the hard coating layer (HC2) using a thickness measuring device (MH-15M, SENDAI NIKON Corp.) and calculating the difference between the two thicknesses, the thickness of the hard coating layer (HC2) was 8 µm.

### Preparation Example 4: Formation of of Surface Protection Film (PF)

A 20 µm pressure sensitive adhesive layer and a 38 µm PET film as a surface protection film (LDM-EPCB, LG Chem) were attached to the surface opposite to the hard coating layer (HC2) of the polarizing plate (produced in Preparation Example 3) by a lamination method, thereby producing a polarizing plate having the surface protection film attached thereto.

### Preparation Example 5: Formation of Transparent Conductive Layer (ITO/IML)

The surface protection film-attached polarizing plate of Preparation Example 4 was placed, the sputter gun was operated by application of 450 W DC power, and plasma was induced in the ITO (10 wt% Sn doped In₂O₃) target to form a transparent conductive layer (90 nm) on one surface of the hard coating layer (HC2), thereby manufacturing a first conductive laminate and a second conductive laminate, each having a laminated structure of surface protection film/polarizing plate/hard coating layer/transparent conductive layer. The formed transparent conductive layer was treated with ions by operating the ion gun with 50 W DC power. At this time, the pressure was maintained at 3 mTorr at room temperature, and argon gas and oxygen gas were supplied at 30 sccm and 1 sccm, respectively. Here, the ITO thickness as ITO performance was measured using FT-SEM, and ITO sheet resistance (Ω/□) was measured using a four-point probe.

### Preparation Example 6: Formation of Alignment Film

The transparent conductive layer (ITO/IML) surface of each of the first conductive laminate and the second conductive laminate manufactured in the Preparation Example 5 was coated with an alignment solution which was then dried (80°C/2 minutes). Thereafter, the dried alignment solution was irradiated with UV light to form an alignment film, thereby manufacturing an upper laminate and a lower laminate, each having a laminated structure of surface protection film/polarizing plate/hard coating layer/transparent conductive layer/alignment film.

### Preparation Example 7: Ball Spacer Spray

A mixed solvent was prepared by mixing 0.03 g of a ball spacer (SP series, Sekisui) with 100 ml of IPA. Thereafter, the lower laminate of Preparation Example 6 was placed in a spacer sprayer (SDSS-KHU02, Shindo Eng Lab), and the prepared mixed solvent was sprayed at 110°C and dried for 20 minutes, thereby forming a ball spacer on the alignment film of the lower laminate of Preparation Example 6.

### Preparation Example 8: Manufacturing of Transmittance Variable Optical Laminate

A sealant UVF-006, 70,000 mPa·s, SEKISUI Co., Ltd.) was applied to the transparent conductive layer (ITO/IML) surface of the lower laminate, on which the ball spacer was formed according to Preparation Example 7, using a sealant dispenser (SHOTmini 200Ωx, MUSASHI Co., Ltd.) with a sharp needle (SPN-0.25-12.7L) at a discharge pressure of 200 mPa according to the product size drawing, and a liquid crystal was injected onto the alignment film using the ODF (One Drop Filling) process. Thereafter, in a state in which the polarizing axes of the polarizing plates provided in the upper and lower laminates of Preparation Example 6 were arranged parallel to each other at 0° or 90°, the laminates were bonded to each other at a pressure of 3 kg/cm², thereby manufacturing a transmittance variable optical laminate for a smart window.

### Examples and Comparative Examples

### Example 1

A transmittance variable optical laminate of Example 1 was manufactured according to Preparation Examples 1 to 8.

### Example 2

A transmittance variable optical laminate of Example 2 was manufactured in the same manner as in Example 1, except that a surface protection film (AY-638, Fujimori Co., Ltd.) was used in Preparation Example 4.

### Example 3

A transmittance variable optical laminate of Example 3 was manufactured in the same manner as in Example 1, except that a hard coating layer (HC1) was prepared instead of the surface protection film in Preparation Example 4. The hard coating layer (HC1) was prepared to have a thickness of 3 µm using a Mayer bar in the same manner as in Preparation Example 3.

### Example 4

A transmittance variable optical laminate of Example 4 was manufactured in the same manner as in Example 1, except that a hard coating layer (HC1) was prepared instead of the surface protection film in Preparation Example 4. The hard coating layer (HC1) was prepared to have a thickness of 20 µm using a Mayer bar in the same manner as in Preparation Example 3.

### Comparative Example 1

A transmittance variable optical laminate of Comparative Example 1 was manufactured in the same manner as in Example 1, except that a surface protection film (LDM-EPHC, LG Chem) was used in Preparation Example 4.

### Comparative Example 2

A transmittance variable optical laminate of Comparative Example 2 was manufactured in the same manner as in Example 1, except that a surface protection film (AS3-501, Fujimori Co., Ltd.) was used in Preparation Example 4.

### Comparative Example 3

A transmittance variable optical laminate of Comparative Example 3 was manufactured in the same manner as in Example 1, except that a hard coating layer (HC1) was prepared instead of the surface protection film in Preparation Example 4. The hard coating layer (HC1) was prepared to have a thickness of 2 µm using a Mayer bar in the same manner as in Preparation Example 3.

### Comparative Example 4

A transmittance variable optical laminate of Comparative Example 3 was manufactured in the same manner as in Example 1, except that a hard coating layer (HC1) was prepared instead of the surface protection film in Preparation Example 4. The hard coating layer (HC1) was prepared to have a thickness of 23 µm using a Mayer bar in the same manner as in Preparation Example 3.

### Experimental Example

### (1) Evaluation of Peeling Force

Each of the transmittance variable optical laminates of Examples 1 and 2 and Comparative Examples 1 and 2 was cut to a size of 25 mm x 250 mm using a super cutter, and then bonded to a glass plate using a pressure sensitive adhesive, thereby preparing specimens. Each of the prepared specimens was fixed to a universal testing machine, and the 180° peeling force (N/25 mm) between the light control laminate and the surface protection film was measured at a speed of 300 mm/min. The measurement results are shown in Tables 1 and 2 below.

### (2) Evaluation of Appearance Reliability

For the optical laminates of Examples 1 and 2 and Comparative Examples 1 and 2, according to the method described in Korean Patent Application Publication No. 10-2013-0060879, the surface protection film was peeled off from both surfaces of the optical laminate having a 38" size (800 x 500 mm), and then whether the sealant would burst and whether bubbles would be generated were checked. The evaluation results are shown in Tables 1 and 2 below.

### <Criteria for Evaluation>

∘: Good evaluation results (the sealant did not burst and no bubbles were generated in the liquid crystal area)
X: Poor evaluation results (bubbles were generated in the pressure sensitive adhesive layer during ITO deposition, or the sealant did burst or bubbles were generated during peeling)

### (3) Measurement of Thickness of Hard Coating Layer (HC1)

For the optical laminates of Examples 3 and 4 and Comparative Examples 3 and 4, the thickness of the polarizing plate after the formation of the hard coating layer (HC1) and the thickness of the polarizing plate before the formation of the hard coating layer (HC1) were measured using a thickness measuring device (MH-15M, SENDAI NIKON Corp.), and the difference between the two thicknesses was calculated to determine the thickness of the hard coating layer (HC1). The measurement results are shown in Tables 1 and 2 below.

### (4) Evaluation of Surface Pencil Hardness

For the optical laminates of Examples 3 and 4 and Comparative Examples3 and 4, the surface pencil hardness of the hard coating surface was measured using a pencil hardness tester (Sukbo Science Co., Ltd., Korea) at a load of 500 g. The pencil used was a Mitsubishi product, and five measurements were made for each pencil hardness. After heat treatment at 100°C for 10 minutes, whether scratches occurred was visually checked. The evaluation results are shown in Tables 1 and 2 below.

### (5) Steel Wool Test

For the optical laminates of Examples 3 and 4 and Comparative Examples 3 and 4, the abrasion resistance of the hard coating surface of each optical laminate was tested by reciprocating 10 times at a speed of 100 mm/sec under 1 kg/(2 cm x 2 cm) using a steel wool tester (WT-LCM100, Korea Protech Co., Ltd.). #0000 was used as the steel wool. The evaluation results are shown in Tables 1 and 2 below.

### <Criteria for Evaluation>

∘: no scratch, no discoloration
△: 1 to 10 scratches, no discoloration
X: more than 10 scratches, discoloration (visually confirmed)

### (6) Evaluation of Reliability Using Mandrel

For the optical laminates of Examples 3 and 4 and Comparative Examples 3 and 4, the flexural characteristics and crack resistance were evaluated using a cylindrical bending tester (Lab-Q D605, CKSI Co., Ltd.). Specifically, a test specimen (size: 100 x 100 mm) composed of upper and lower plates bonded to each other was placed on a 32-mm-diameter metal bar so that the lower plate surface of the polarizing plate was in contact with the metal bar. The specimen was folded, a 1-kg load was applied to the outer side of the folded area, and the specimen was placed in an oven at 90°C for 2 hours and placed at room temperature. The folded area was observed to check whether cracks occurred. The evaluation results are shown in Tables 1 and 2 below.

### <Criteria for Evaluation>

∘: no crack
X: 1 or more cracks

**[Table 1]**

| | Example 1 | Example 2 | Example 3 | Example 4 |
|---|---|---|---|---|
| Peeling force (N/25mm) | 1.0 | 2.4 | - | - |
| Evaluation of appearance reliability | ○ | ○ | - | - |
| Thickness of hard coating layer (HC1m µm) | - | - | 3 | 20 |
| Surface pencil hardness | - | - | HB | 6H |
| Steel wool test | - | - | ○ | ○ |
| Evaluation of reliability using mandrel | - | - | ○ | ○ |

**[Table 2]**

| | Comparative Example 1 | Comparative Example 2 | Comparative Example 3 | Comparative Example 4 |
|---|---|---|---|---|
| Peeling force (N/25mm) | 0.7 | 2.6 | - | - |
| Evaluation of appearance reliability | X | X | - | - |
| Thickness of hard coating layer (HC1, µm) | - | - | 2 | 23 |
| Surface pencil hardness | - | - | B | 7H |
| Steel wool test | - | - | X | X |
| Evaluation of reliability using mandrel | - | - | ○ | X |

Referring to Tables 1 and 2 above, from the results of evaluation of appearance reliability, it can be seen that, in the case of Examples 1 and 2 in which the peeling force of the surface protection film was 1.0 N/25 mm to 2.4 N/25 mm, there was no sealant bursting and no bubble generation in the liquid crystal area after peeling of the surface protection film. On the other hand, it can be seen that, in the case of Comparative Examples 1 and 2 in which the peeling forces of the surface protection film were 0.7 N/25 mm and 2.6 N/25 mm, respectively, which are out of the range of 1.0 N/25 mm to 2.4 N/25 mm, bubbles were generated at the attachment interface of the surface protection film during ITO deposition, or the sealant did burst or bubbles were generated during peeling.

Meanwhile, from the results of steel wool test, it can be seen that, in the case of Examples 3 and 4 in which the surface pencil hardness of the hard coating layer was HB to 6H, the abrasion resistance of the hard coating layer was excellent. From the results of evaluating the reliability using the mandrel, it can be seen that the flexural characteristics of Examples 3 and 4 were excellent, and thus no crack occurred. On the other hand, it can be seen that, in the case of Comparative Examples 3 and 4 in which the surface pencil hardnesses of the hard coating layer were B and 7H, respectively, which are out of the range of HB to 6H, the steel wool test results and the results of reliability evaluation using the mandrel evaluation were poor compared to those of the Examples.

Therefore, it can be seen that, when the peeling force of the surface protection film included in the optical laminate is 1.0 N/25 mm to 2.4 N/25 mm, damage to the sealant and the entry of bubbles into the liquid crystal may be prevented from occurring during peeling of the surface protection film. Also, it can be seen that, even when the optical laminate does not have the surface protection film, when the hard coating layer having a surface pencil hardness of HB to 6H is included in the optical laminate, it has excellent abrasion resistance and flexural characteristics, and thus may prevent the polarizing plate from the external environment.

### Industrial Applicability

According to an optical laminate according to one embodiment of the present invention, the peeling force of the surface protection film may be optimized, thus preventing damage to the sealant and the entry of bubbles into the liquid crystal from occurring during peeling of the surface protection film.

## Claims

1. A transmittance variable optical laminate comprising a light control laminate comprising:
a first polarizing plate;
a first transparent conductive layer formed on one surface of the first polarizing plate;
a second polarizing plate opposite to the first polarizing plate;
a second transparent conductive layer formed on one surface of the second polarizing plate and opposite to the first transparent conductive layer; and
a liquid crystal layer provided between the first transparent conductive layer and the second transparent conductive layer,
wherein at least one of a surface protection film and a hard coating layer is provided on one or both surfaces of the light control laminate, and
at least one of the first transparent conductive layer and the second transparent conductive layer is formed in direct contact with any one of the first polarizing plate and the second polarizing plate,
wherein the surface protection film has a peeling force of 1.0 N/25 mm to 2.4 N/25 mm, and the hard coating layer has a surface pencil hardness of HB to 6H.

2. The transmittance variable optical laminate of claim 1, wherein the surface protection film comprises a base film and a pressure sensitive adhesive layer formed on the base film, and is laminated on the light control laminate via the pressure sensitive adhesive layer.

3. The transmittance variable optical laminate of claim 2, wherein the base film comprises at least one selected from the group consisting of a polyolefin-based film, a polyester-based film, an acrylic film, a styrene-based film, an amide-based film, a polyvinyl chloride-based film, a polyvinylidene chloride-based film, and a polycarbonate-based film.

4. The transmittance variable optical laminate of claim 2, wherein the base film has a thickness of 10 µm to 300 µm.

5. The transmittance variable optical laminate of claim 2, wherein the pressure sensitive adhesive layer has a thickness of 1 µm to 30 µm.

6. The transmittance variable optical laminate of claim 1, wherein, when the surface protection film is peeled off from the light control laminate, the liquid crystal layer does not burst or no bubbles occur.

7. The transmittance variable optical laminate of claim 1, wherein the surface protection film is provided on both surfaces of the light control laminate.

8. The transmittance variable optical laminate of claim 1, wherein the hard coating layer is provided on both surfaces of the light control laminate.

9. The transmittance variable optical laminate of claim 1, wherein the hard coating layer is provided on one surface of the light control laminate, and the surface protection film is provided on the other side opposite to the one surface of the light control laminate.

10. The transmittance variable optical laminate of claim 1, wherein the hard coating layer comprises at least one selected from the group consisting of an acrylate-based compound and an epoxy-based compound.

11. The transmittance variable optical laminate of claim 1, wherein the hard coating layer has a thickness of 1 µm to 50 µm.

12. The transmittance variable optical laminate of claim 1, wherein least one of the first transparent conductive layer and the second transparent conductive layer comprises at least one selected from the group consisting of a transparent conductive oxide, a metal, a carbonaceous material, a conductive polymer, a conductive ink, and nanowires.

13. The transmittance variable optical laminate of claim 1, wherein at least one of the first polarizing plate and the second polarizing plate comprises at least one functional layer selected from the group consisting of a protective layer, a retardation matching layer, and a refractive index-matching layer.

14. The transmittance variable optical laminate of claim 1, wherein at least one of the first polarizing plate and the second polarizing plate has a thickness of 30 µm to 200 µm.

15. The transmittance variable optical laminate of claim 1, wherein the liquid crystal layer comprises at least one spacer selected from the group consisting of a ball spacer and a column spacer.

16. The transmittance variable optical laminate of claim 15, wherein the spacer has a height of 1 µm to 10 µm.

17. The transmittance variable optical laminate of claim 15, wherein an occupied area of the spacer in the liquid crystal layer is 0.01% to 10% of an area of the liquid crystal layer.

18. The transmittance variable optical laminate of claim 1, further comprising an alignment film on both surfaces of the liquid crystal layer.

19. A smart window comprising the transmittance variable optical laminate according to any one of claims 1 to 18.

20. A means of transportation comprising the smart window of claim 19.

21. An automobile in which the smart window of claim 19 is applied to at least one of a front window, a rear window, a side window, a sunroof window, and an interior partition.

22. A wearable device comprising the smart window of claim 19.

23. A window for a building comprising the smart window of claim 19.
